# EUROPÄISCHE PATENTSCHRIFT

(11) **EP 2 784 461 B1**
(45) Veröffentlichungstag und Bekanntmachung des Hinweises auf die Patenterteilung: **02.05.2018**
(21) Anmeldenummer: 13161334.1
(22) Anmeldetag: 27.03.2013
(51) Int. Cl.: G01L 9/12, G01L 9/00

(54) **Druckmesszelle zur Erfassung des Druckes eines an die Messzelle angrenzenden Mediums**
Pressure measurement cell for detecting the pressure of a medium adjoining the measurement cell
Cellule de mesure de pression pour l'enregistrement de la pression d'un fluide adjacent à la cellule de mesure de pression

(43) Veröffentlichungstag der Anmeldung: 01.10.2014
(73) Patentinhaber: VEGA Grieshaber KG, 77709 Wolfach (DE)
(72) Erfinder: Fehrenbach, Josef, 77716 Haslach (DE)
(74) Vertreter: Westphal, Mussgnug & Partner Patentanwälte mbB

(56) Entgegenhaltungen:
- WO-A1-2005/062013
- DE-A1-102009 002 662
- DE-B3- 10 345 299
- US-A- 4 141 252

## Beschreibung

Die Erfindung betrifft eine Druckmesszelle zur Erfassung des Druckes eines an die Messzelle angrenzenden Mediums gemäß dem Oberbegriff des Patentanspruchs 1.

Solche Druckmesszellen sind bekannt und werden in vielen Bereichen der Prozesstechnik zur Prozessbeobachtung eingesetzt. Zur Druckmessung eines an die Messzelle angrenzenden Mediums weist die Messzelle eine elastische Messmembran auf, die in Abhängigkeit von dem innerhalb des Mediums herrschenden Drucks ausgelenkt wird, wobei die Auslenkung bzw. reversible Deformation der Membran in ein korrespondierendes elektrisches Messsignal elektromechanisch gewandelt wird. Als kapazitiver elektromechanischer Wandler bildet eine auf der dem Medium abgewandten Seite der Messmembran angeordnete Messelektrode zusammen mit einer auf einem Grundkörper gegenüberliegend angeordneten Gegenelektrode einen Messkondensator, dessen Kapazität sich in Abhängigkeit der druckbedingten Auslenkung der Messmembran ändert. Die Messmembran bildet zusammen mit dem Grundkörper eine gegenüber dem Medium druckdichte Messkammer.

Bei diesen kapazitiven Druckmesszellen besteht das Problem, dass bei einem Medium mit schnell wechselnden Temperaturen Messfehler bei der Messung des Druckes auftreten, da die Messemembran in direktem Kontakt mit dem Medium steht und daher von dessen Temperaturschwankungen beeinflusst wird.

Es ist bekannt, dass die Temperatur bzw. langsame Temperaturänderungen des Grundkörpers durch Messung von dessen Umgebungstemperatur ermittelt werden und mit diesen Temperaturmesswerten der Druckmesswert entsprechend korrigiert wird. Bei einem großen Temperaturunterschied zwischen der Messemembran und dem Grundkörper der Druckmesszelle, insbesondere wenn sich die Temperatur des Mediums schnell bzw. schlagartig ändert, führt diese Korrekturmethode trotzdem zu einem fehlerhaften Sprung des berechneten Druckmesswertes, der erst mit dem langsamen Durchwärmen der gesamten Druckmesszelle langsam auf den richtigen Messwert zurückgeht.

Des Weiteren ist es zur Bestimmung eines temperaturkompensierten Druckmesswertes bekannt, sowohl die Temperatur des Grundkörpers der Druckmesszelle als auch die Temperatur von deren Messmembran zu messen und mittels dieser beiden Temperaturmesswerte den Druckmesswert zu kompensieren.

So ist beispielsweise aus der DE 40 11 901 A1 eine kapazitive Druckmesszelle bekannt, bei welcher auf der Messmembran eine Widerstandsbahn aus einem Werkstoff mit temperaturabhängigem Widerstand angeordnet ist, wobei diese Widerstandsbahn kreisförmig um die eine Kondensatorplatte des Messkondensators bildende kreisförmige Messelektrode gelegt ist. Die Herstellung einer solchen, eine Widerstandsbahn aufweisenden Messmembran ist aufwändig und führt daher zu hohen Herstellungskosten. Weitere Drucksensoren sind in WO 2005/062013 A1, US 4,141,252 und in der DE 10 2009 002 662 A1 offenbart.

Ausgehend von diesem Stand der Technik ist es Aufgabe der vorliegenden Erfindung, eine Druckmesszelle der eingangs genannten Art anzugeben, welche eine einfache und genaue Temperaturmessung der Messmembran einer Druckmesszelle erlaubt.

Diese Aufgabe wird gelöst durch eine Druckmesszelle mit den Merkmalen des Patentanspruchs 1.

Eine solche Druckmesszelle zur Erfassung des Druckes eines an die Druckmesszelle angrenzenden Mediums, welche eine elastische Messmembran, deren erste Seite zumindest teilweise mit dem Medium in Kontakt steht und deren zweite Seite von dem Medium abgewandt ist, und einen der zweiten Seite der Messmembran gegenüberliegend angeordneten Grundkörper aufweist, zeichnet sich dadurch aus, dass zur Temperaturmessung der Messmembran durch Erfassung der von deren zweiten Seite abgestrahlten Infrarot-Strahlung der Grundkörper mit einem Infrarot-Sensor ausgebildet ist, wobei die infrarotempfindliche Detektionsfläche des IR-Sensors auf die Messmembran gerichtet ist, wobei die Gegenelektrode von einer kreisförmigen Referenzelektrode umschlossen ist, die zusammen mit der Messelektrode einen Referenzkondensator bildet, wobei die Messmembran und der Grundkörper zur Herstellung der druckdichten Messkammer randseitig über einen Abstandshalter auf Abstand gehalten sind, wobei der Infrarot-Sensor zentrisch in Bezug auf die zweite Seite der Messmembran angeordnet ist.

Der Vorteil einer solchen erfindungsgemäßen Druckmesszelle liegt in dem einfachen Aufbau, da die Messmembran nicht verändert werden muss, insbesondere keine weiteren Schichten zur Herstellung von beispielsweise Widerstandsbahnen und deren Kontaktierungen erforderlich sind.

Ferner hat sich mit dieser erfindungsgemäßen Druckmesszelle gezeigt, dass eine schnelle bzw. abrupte Temperaturänderung des Mediums ebenso schnell und unmittelbar detektierbar ist.

Schließlich kann eine solche erfindungsgemäße Druckmesszelle mit wenigen zusätzlichen Kosten hergestellt werden, da als Infrarot-Sensoren marktübliche und daher kostengünstige, elektronische Bauelemente, wie beispielsweise Infrarot(IR)-detektierende Dioden oder Transistoren zur Verfügung stehen.

Gemäß einer vorteilhaften Ausgestaltung der Erfindung weist der Grundkörper zur Aufnahme des Infrarot-Sensors eine der äußeren Kontur des Infrarot-Sensors angepasste Aufnahmeöffnung auf. Ein solcher Grundkörper lässt sich einfach realisieren, so dass die infrarotempfindliche Detektionsfläche des Infrarot-Sensors auf die Messmembran ausgerichtet ist. Erfindungsgemäß ist die Druckmesszelle als kapazitive Messzelle aufgebaut. Es bildet die Messmembran zusammen mit dem Grundkörper eine druckdichte Messkammer, wobei zur Bildung einer Messkapazität auf der zweiten Seite der Messmembran eine Messelektrode und auf Grundkörper eine Gegenelektrode angeordnet ist.

Ist bei einer solchen Druckmesszelle der Infrarot-Sensor in einer durchgehenden Aufnahmeeröffnung des Grundkörpers angeordnet, muss natürlich der Infrarot-Sensor gegenüber dem Grundkörper entsprechend abgedichtet werden, um die Druckdichtigkeit der Messkammer aufrechtzuerhalten. Wird dagegen der Infrarot-Sensor auf dem Grundkörper angeordnet, sind lediglich die durch den Grundkörper geführten Anschlussleitungen des Infrarot-Sensors gegenüber dem Grundkörper abzudichten.

Schließlich ist es vorteilhaft, wenn die Messmembran und/oder der Grundköper aus einem Keramikmaterial hergestellt sind/ist.

Die erfindungsgemäße Druckmesszelle kann mit Vorteil zum Aufbau von Druckmessumformer verwendet werden.

Die Erfindung wird nachstehend anhand von Ausführungsbeispielen unter Bezugnahme auf die beigefügten Figuren ausführlich beschrieben. Es zeigen:
- Figur 1: eine schematische Schnittdarstellung einer Druckmesszelle als erstes Ausführungsbeispiel gemäß der Erfindung, und
- Figur 2: eine schematische Schnittdarstellung einer Druckmesszelle als zweites Ausführungsbeispiel gemäß der Erfindung.

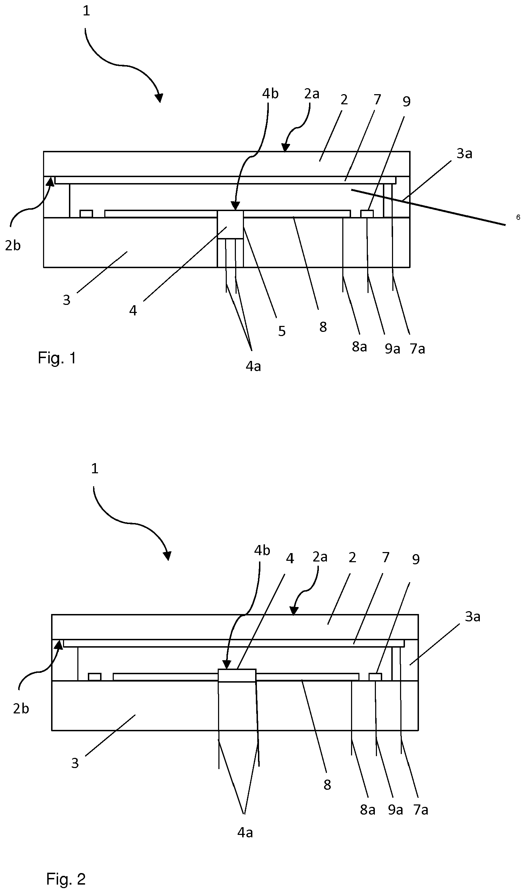

Figur 1 zeigt eine kapazitive Messzelle 1 mit einer aus einem Grundkörper 3 aus Keramik und einer ebenso aus Keramik hergestellten Messmembran 2 gebildeten Messkammer 6. Die Messmembran 2 und der Grundkörper 3 sind zur Herstellung der druckdichten Messkammer 6 randseitig über einen bspw. aus Glas oder einer Glaslegierung hergestellten Abstandshalter 3a auf Abstand gehalten.

Mit ihrer äußeren ersten Seite 2a steht die Messmembran 2 mit einem Medium in Kontakt, dessen Druck mit der Messzelle 1 gemessen werden soll. Die innere zweite Seite 2b der Messmembran 2 ist mit einer kreisförmigen Messelektrode 7 belegt, die zusammen mit einer auf der gegenüberliegenden Oberfläche des Grundkörpers 3 angeordneten, kreisförmigen Gegenelektrode 8 einen Messkondensator bildet, dessen gemessene Kapazität von der durch den Mediendruck bewirkten Auslenkung der Messmembran 2 abhängt. Die Gegenelektrode 8 wird von einer kreisringförmigen Referenzelektrode 9 umschlossen, die zusammen mit der Messelektrode 7 einen Referenzkondensator bildet, dessen Referenzkapazität aufgrund deren Position am äußeren Rand der Messkammer 6, in dem die Messmembran wesentlichen keine Auslenkung zeigt, nahezu konstant ist. Die Messelektrode 7, die Gegenelektrode 8 sowie die Referenzelektrode 9 werden jeweils über Anschlussleitungen 7a, 8a bzw. 9a mit einer Elektronikeinheit (nicht dargestellt) der Messzelle 1 verbunden.

Ein Infrarot-Sensor 4 wird von einer in dem Grundkörper 13 zentrisch angeordneten Aufnahmeöffnung 5, die auch durch die Gegenelektrode 8 geführt ist, aufgenommen, so dass deren infrarotempfindliche Detektionsfläche 4b auf die gegenüberliegende Messmembran 2 gerichtet ist. Damit kann von diesem Infrarot-Sensor 4 die Infrarotstrahlung der Messmembran 2 detektiert werden und aus dem an zwei Anschlussleitungen 4a zur Verfügung stehenden Messsignal des Infrarot-Sensors 4 deren Temperatur bestimmt werden. Gegenüber der Druckkammer 6 ist der Infrarot-Sensor 4 druckdicht in dem Grundkörper 3 montiert. Die Anschlussleitungen 4a des Infrarot-Sensors 4 werden auf der Rückseite des Grundkörpers 3 zur Auswertung der Messsignale ebenso mit der Elektronikeinheit verbunden.

Das in Figur 2 dargestellte weitere Ausführungsbeispiel einer erfindungsgemäßen Druckmesszelle 1 unterscheidet sich von derjenigen nach Figur 1 lediglich durch die Anordnung des Infrarot-Sensors 4 in der Messkammer 6. Bei dieser Druckmesszelle 1 wird der Infrarot-Sensor 4 nicht von einer Aufnahmeöffnung des Grundkörpers 3 aufgenommen, sondern ist in einer Aussparung der Gegenelektrode 8 direkt auf dem Grundkörper 3 in einer zentralen Lage angeordnet, so dass lediglich die Anschlussleitungen 4a des Infrarot-Sensors 4 druckdicht durch den Grundkörper 3 geführt. In dieser zentralen Lage wird die Infrarot-strahlung der Messmembran 2 von dem Infrarot-Sensor 4 detektiert und ein entsprechendes Messsignal erzeugt, welches von der Elektronikeinheit ausgewertet wird.

Bei diesen beiden Ausführungsbeispielen gemäß den Figuren 1 und 2 werden die messfehlerbehafteten Druckmesssignale, die von dem Messkondensator erzeugt werden, mittels der Temperaturmesssignale des Infrarot-Sensors 4 entsprechend eines vorgegebenen Algorithmus korrigiert bzw. kompensiert.

### Bezugszeichen

- 1: Druckmesszelle
- 2: Messmembran
- 2a: erste Seite der Messmembran 2
- 2b: zweite Seite der Messmembran 2
- 3: Grundkörper
- 3a: Abstandshalter
- 4: Infrarot-Sensor
- 4a: Anschlussleitungen des Infrarot-Sensors 4
- 4b: Detektionsfläche des Infrarot-Sensors 4
- 5: Aufnahmeöffnung des Grundkörpers
- 6: Messkammer der Druckmesszelle 1
- 7: Messelektrode
- 7a: Durchkontaktierung der Messelektrode 7
- 8: Gegenelektrode
- 8a: Durchkontaktierung der Gegenelektrode
- 9: Referenzelektrode
- 9a: Durchkontaktierung der Referenzelektrode

## Patentansprüche

1. Druckmesszelle (1) zur Erfassung des Druckes eines an die Druckmesszelle (1) angrenzenden Mediums, umfassend
- eine elastische Messmembran (2), deren erste Seite (2a) zumindest teilweise mit dem Medium in Kontakt steht und deren zweite Seite (2b) von dem Medium abgewandt ist, und
- einen der zweiten Seite (2b) der Messmembran (2) gegenüberliegend angeordneten Grundkörper (3), wobei zur kapazitiven Erfassung des in dem Medium herrschenden Druckes der Grundkörper (3) zusammen mit der Messmembran (2) eine druckdichte Messkammer (6) bildet, wobei zur Bildung einer Messkapazität auf der zweiten Seite (2b) der Messmembran (2) eine Messelektrode (7) und auf dem Grundkörper (3) eine Gegenelektrode (8) angeordnet ist,
**dadurch gekennzeichnet, dass**
zur Temperaturmessung der Messmembran (2) durch Erfassung der von deren zweiten Seite (2b) abgestrahlten Infrarot-Strahlung der Grundkörper (3) mit einem Infrarot-Sensor (4) ausgebildet ist und die infrarotempfindliche Detektionsfläche (4b) des IR-Sensors (4) auf die Messmembran (2) gerichtet ist, wobei die Gegenelektrode (8) von einer kreisförmigen Referenzelektrode (9) umschlossen ist, die zusammen mit der Messelektrode (7) einen Referenzkondensator bildet, wobei die Messmembran (2) und der Grundkörper (3) zur Herstellung der druckdichten Messkammer (6) randseitig über einen Abstandshalter (3a) auf Abstand gehalten sind, wobei der Infrarot-Sensor (4) zentrisch in Bezug auf die zweite Seite (2b) der Messmembran (2) angeordnet ist.

2. Druckmesszelle (1) nach Anspruch 1,
**dadurch gekennzeichnet, dass**
der Grundkörper (3) zur Aufnahme des Infrarot-Sensors(4) eine der äußeren Kontur des Infrarot-Sensors (4) angepasste Aufnahmeöffnung (5) aufweist.

3. Druckmesszelle (1) nach einem der vorhergehenden Ansprüche,
**dadurch gekennzeichnet, dass**
die Messmembran (2) und/oder der Grundköper (3) aus einem Keramikmaterial hergestellt sind/ist.

4. Druckmessumformer mit einer Druckmesszelle (1) nach einem der vorhergehenden Ansprüche.

## Claims

1. Pressure measurement cell (1) for detecting the pressure of a medium adjoining the pressure measurement cell (1), comprising
- a resilient measuring membrane (2), of which the first side (2a) is at least partially in contact with the medium and the second side (2b) faces away from the medium, and
- a main body (3) arranged opposite the second side (2b) of the measuring membrane (2), wherein for capacitive detection of the pressure prevailing in the medium the main body (3) together with the measuring membrane (2) forms a pressure-tight measurement chamber (6), wherein in order to form a measuring capacitance a measuring electrode (7) is arranged on the second side (2b) of the measuring membrane (2) and a counterelectrode (8) is arranged on the main body (3),
**characterised in that**, for temperature measurement of the measuring membrane (2) by detection of the infrared radiation emitted by the second side (2b), the main body (3) is formed with an infrared sensor (4) and the infrared-sensitive detection surface (4b) of the IR sensor (4) is directed towards the measuring membrane (2), wherein the counterelectrode (8) is surrounded by a circular reference electrode (9), which together with the measuring electrode (7) forms a reference capacitor, wherein for production of the pressure-tight measurement chamber (6) the measuring membrane (2) and the main body (3) are held spaced apart at the edge by means of a spacer (3a), wherein the infrared sensor (4) is arranged centrally with regard to the second side (2b) of the measuring membrane (2).

2. Pressure measurement cell (1) according to claim 1, **characterised in that** the main body (3) has a receiving opening (5) adapted to the outer contour of the infrared sensor (4) to receive the infrared sensor (4).

3. Pressure measurement cell (1) according to one of the preceding claims,
**characterised in that** the measuring membrane (2) and/or the main body are/is produced from a ceramic material.

4. Pressure transducer (1) having a pressure measurement cell (1) according to one of the preceding claims.

## Revendications

1. Cellule de mesure de pression (1) permettant de détecter la pression d'un fluide adjacent à celle-ci comprenant :
- une membrane de mesure élastique (2) dont un premier côté (2a) est au moins partiellement en contact avec le fluide et dont le second côté (2b) est situé à l'opposé du fluide, et
- un corps de base (3) monté en regard du second côté (2b) de la membrane de mesure (2), pour permettre une détection capacitive de la pression régnant dans le fluide, le corps de base (3) formant avec la membrane de mesure (2) une chambre de mesure (6) étanche à la pression, pour former une capacité de mesure une électrode de mesure (7) étant montée sur le second côté (2b) de la membrane de mesure (2) et une contre électrode (8) étant montée sur le corps de base (3),
**caractérisée en ce que**
pour permettre la mesure de la température de la membrane de mesure (2) par détection du rayonnement infrarouge rayonnée par son second côté (2b), le corps de base (3) est équipé d'un capteur infrarouge (4), et la surface de détection (4b) sensible aux infrarouges du détecteur IR (4) est orientée vers la membrane de mesure (2), la contre électrode (8) étant entourée d'une électrode de référence circulaire (9) qui forme avec l'électrode de mesure (7) un condensateur de référence, la membrane de mesure (2) et le corps de base (3) étant maintenus à distance sur leurs bords par un élément d'écartement (3a), pour obtenir la chambre de mesure (6) étanche à la pression et le capteur infrarouge (4) étant monté dans une position centrale par rapport au second côté (2b) de la membrane de mesure (2).

2. Cellule de mesure de pression (1) conforme à la revendication 1,
**caractérisée en ce que**
pour permettre la réception du capteur infrarouge (4) le corps de base (3) comporte, une ouverture de réception (5) adaptée au contour externe de ce capteur infrarouge (4).

3. Cellule de mesure de pression (1) conforme à l'une des revendications précédentes,
**caractérisée en ce que**
la membrane de mesure (2) et/ou le corps de base (3) est(sont) réalisé(es) en un matériau céramique.

4. Transducteur de pression équipé d'une cellule de mesure de pression (1) conforme à l'une des revendications précédentes.
